Europäisches Patentamt

(19) European Patent Office

Office européen des brevets

(11) **EP 0 554 108 B1**

(12) **EUROPEAN PATENT SPECIFICATION**

(45) Date of publication and mention
of the grant of the patent:
**09.07.1997 Bulletin 1997/28**

(51) Int. Cl.$^6$: **B60C 11/00**, B60C 3/04

(21) Application number: **93300663.7**

(22) Date of filing: **29.01.1993**

(54) **Pneumatic radial tires**

Radiale Luftreifen

Bandages pneumatiques radiaux

(84) Designated Contracting States:
**DE ES FR GB IT**

(30) Priority: **29.01.1992 JP 14207/92**
**05.03.1992 JP 48554/92**
**11.03.1992 JP 52769/92**
**11.03.1992 JP 52770/92**

(43) Date of publication of application:
**04.08.1993 Bulletin 1993/31**

(73) Proprietor: **BRIDGESTONE CORPORATION**
**Tokyo 104 (JP)**

(72) Inventors:
• **Dobashi, Hideyuki**
**Kodaira City, Tokyo (JP)**
• **Hiruma, Masato**
**Inagi City, Tokyo (JP)**
• **Watanabe, Nobuyuki**
**Kodaira City, Tokyo (JP)**

(74) Representative: **Whalley, Kevin**
**MARKS & CLERK,**
**57-60 Lincoln's Inn Fields**
**London WC2A 3LS (GB)**

(56) References cited:
EP-A- 0 119 152    EP-A- 0 128 852
EP-A- 0 337 279    EP-A- 0 413 574
EP-A- 0 435 620    FR-A- 1 586 370

## Description

This invention relates to a pneumatic tire usable for passenger cars, and more particularly to a pneumatic radial tire which can realize low fuel consumption of a vehicle by reducing the rolling resistance and weight of the tire.

As a means for reducing the rolling resistance of the tire, the tire weight can be reduced. For this purpose, there is proposed a method of thinning a rubber gauge in a tread portion of the tire.

According to such a conventional technique, the rolling resistance becomes smaller as the rubber gauge in the tread portion becomes thinner. However, when the rubber gauge is less than a specific value, the rolling resistance as well as the wear resistance and ride comfortability of the tire are inconveniently degraded, so that it is difficult to simultaneously establish the reduction of the rolling resistance and the improvements of the wear resistance and ride comfortability.

That is, when the rubber gauge in the tread portion becomes too thin for the reduction of the tire weight, the bending rigidity of the tread portion at a section in the widthwise direction of the tire lowers to create a difference in rotating diameter of the tire between a central region and each side region of the tread portion because the ground contacting length of the tread surface is short in the central region and long in the side region. As a result, a large bending deformation at the section in the widthwise direction is produced in the side regions during the rotation of the tire to increase the strain of the tread and hence the rolling resistance.

In the conventional pneumatic radial tire for passenger cars, it is general that the minimum thickness of the inner liner is not less than 0.7 mm and the material thereof is chlorobutyl rubber. The inner liner occupies about 5% of the tire weight, and also the lowering of practical performances such as steering stability, ride comfortability and the like hardly occurs even if the thickness of the inner liner is made thin, so that it is considered that the thinning of the inner liner is effective to reduce the tire weight and the rolling resistance of the tire. In the conventional radial tire, however, the inner liner is obliged to have a minimum thickness of not less than 0.7 mm to provide an air barrier, so that sufficient reduction of tire weight is not yet attained.

In general, the pneumatic radial tire comprises a belt of two or more belt layers each containing steel cords therein, so that there is a problem that it is difficult to attain low fuel consumption because the tire weight becomes large. Further, even if it is intended to reduce the fuel consumption by thinning the thickness of the tread portion or narrowing the width of the steel belt layer, the expected low fuel consumption cannot be attained. In addition, the thickness of the tread portion is thinner and the rigidity of the belt is low to increase input from the road surface, so that there is caused a problem of increasing road noise.

It is, therefore, an aim of the present invention to solve the aforementioned problems of the conventional technique and to provide a pneumatic radial tire capable of effectively reducing the rolling resistance.

It is another aim of the invention to provide a pneumatic radial tire capable of attaining low fuel consumption and effectively reducing road noise.

The present invention provides a pneumatic radial tire comprising a tread portion of cap and base structure, a pair of sidewall portions extending inward from tread ends in the radial direction of the tire, a pair of bead portions extending from the sidewall portions, a carcass of at least one carcass ply extending between the bead portions and containing cords substantially arranged at an angle of 90° with respect to the circumferential direction of the tire, a belt of two belt layers each containing cords arranged at a relatively small cord angle with respect to the circumferential direction, cords of which layers being crossed with each other, and an inner liner, characterized in that a ground contact width of the tread portion is within a range of 0.55-0.70 of the maximum width of the tire, and a rubber gauge of the tread portion is within a range of 0.05-0.08 of a tire height as measured from a bead base of the bead portion, and a base rubber of the tread portion has tan $\delta$ of 0.02-0.07, and the sidewall portion has a rubber gauge of 1.0-2.5 mm and tan $\delta$ of 0.02-0.15, and the inner liner is made from brominated butyl rubber and has a thinnest portion of 0.2-0.7 mm.

In a preferred embodiment of the invention, said belt comprises a radially inner belt layer comprised of steel cords and a radially outer belt layer comprised of organic fiber cords and folded at its side ends inward in the widthwise direction of the tread portion.

In another preferred embodiment of the invention, a rubber gauge at a position separated from a ground contact end of the tread portion toward the bead portion at a distance as a peripheral length of 3-10 mm is within a range of 60-70% of the rubber gauge of the tread portion, and a rubber gauge at a position further separated from the said position toward the bead portion at a distance corresponding to 12-17% of a peripheral length ranging from a contact end of the bead portion with a rim flange to the contact end of the tread portion is within a range of 40-50% of the rubber gauge of the tread portion.

In a further preferred embodiment of the invention, at least one auxiliary layer is disposed on each side portion of the belt so as to extend toward a sidewall portion over a position of maximum width of the belt and is comprised of cords substantially extending in the circumferential direction, in which a Young's modulus of the cord is less than that of the cord in the belt and a peripheral length of a portion extending from the maximum width of the belt toward the sidewall portion in the auxiliary layer is within a range of 8-15% of the width of the belt.

Further preferred features of the invention are as follows:

the ground contact width of the tread portion is within a range of 0.60 - 0.65 of the maximum width of the tire;

the rubber gauge of the tread portion is within a range of 0.065 - 0.075 of the tire height;

the base rubber of the tread portion has tan $\delta$ of 0.03 - 0.05;

the sidewall portion has a rubber gauge of 1.5 - 2.2 mm and tan $\delta$ of 0.05 - 0.09; and

the inner liner has a thinnest portion of 0.3 - 0.4 mm.

The term "rubber gauge of the tread portion" used herein means a thickness of tread rubber inclusive of skid base rubber measured at a center of the tread portion, and the term "rubber gauge of the sidewall portion" used herein means a rubber gauge measured at a position corresponding to the maximum tire width.

The invention will be further described with reference to the accompanying drawings, wherein:

Fig.1 is a radially sectional view of a first embodiment of a pneumatic radial tire;

Fig. 2 is a schematic view schematically illustrating an apparatus for measuring a coefficient of rolling resistance in the tire;

Fig. 3 is a radially sectional view of a second embodiment of a pneumatic radial tire, according to the present invention;

Fig. 4 is a radially sectional view of a third embodiment of a pneumatic radial tire, also according to the present invention;

Fig. 5 is a graph showing a distribution of sound pressure of road noise frequency;

Fig. 6 is a radially sectional view of a fourth embodiment of a pneumatic radial tire; and

Figs. 7a and 7b are schematic partial section views showing other embodiments of thin rubber gauge portions at the side end region of the tread portion.

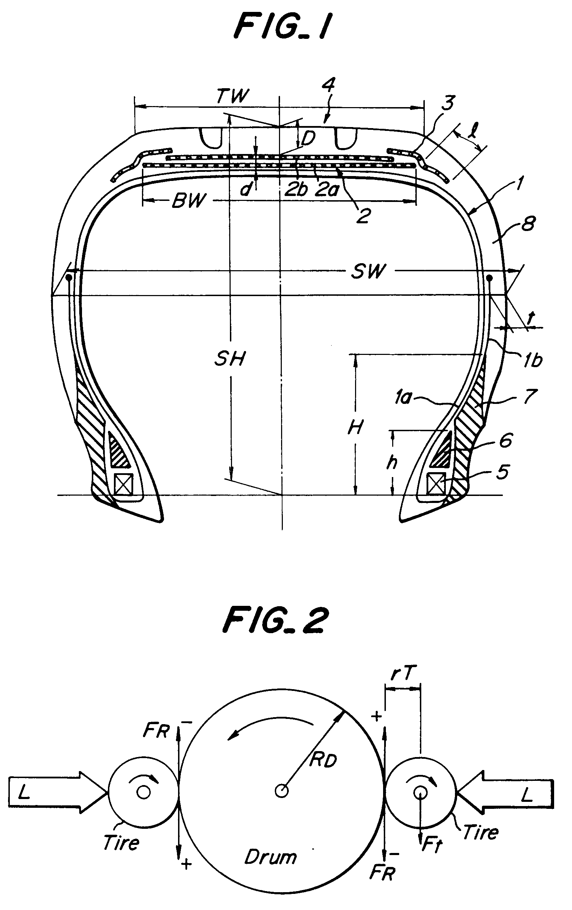

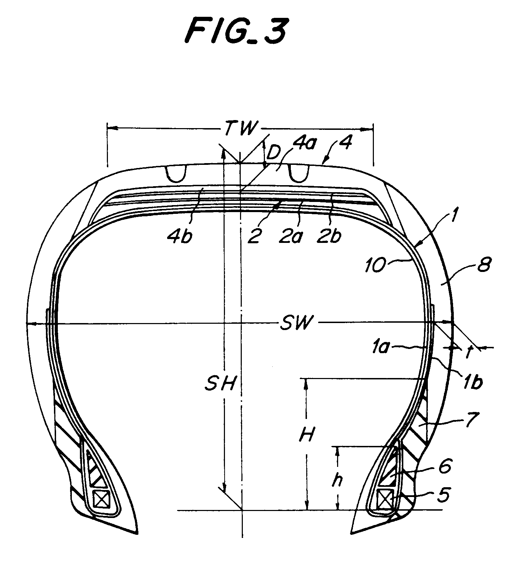

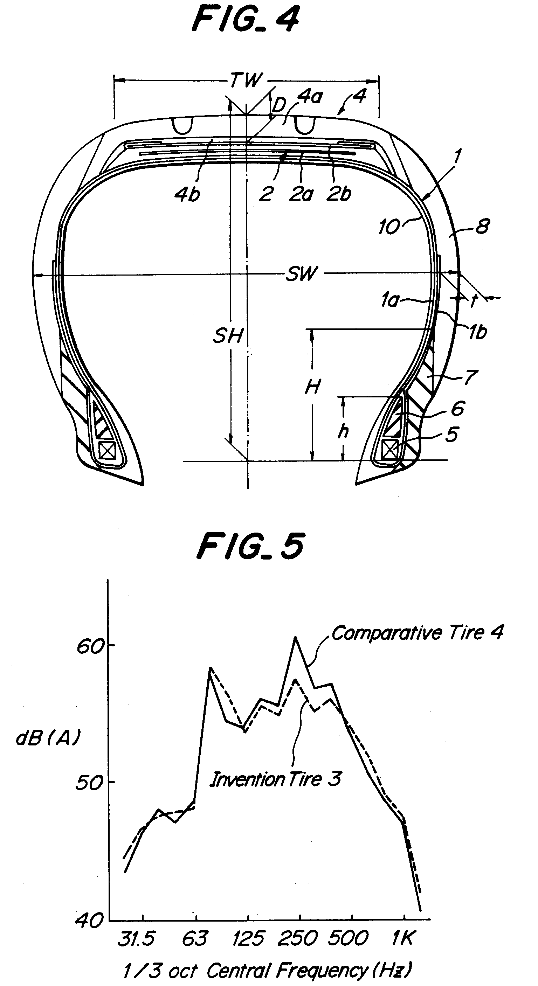

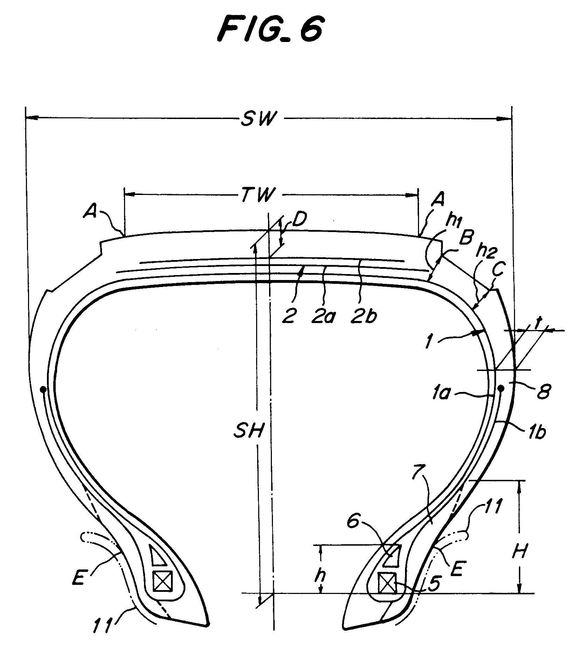

In the drawings, Figs. 3 and 4 illustrate tires according to the present invention; the tires illustrated in Fig. 1 and Fig. 6 are not in accordance with the invention, but nevertheless show some preferred features of the invention.

In a preferred embodiment of the tire of the invention, at least one auxiliary layer disposed on each side end of the belt and extending over the position corresponding to the maximum belt width toward the sidewall portion is comprised of cords substantially extending in the circumferential direction of the tire and the Young's modulus of the cord in the auxiliary layer is made less than that of the cord in the belt layer, whereby the bending deformation in the widthwise direction of the tire at the ground contact area during the running of the tire is decreased to reduce the rolling resistance.

Further, in this preferred embodiment the peripheral length of the portion of the auxiliary layer extending from the position of the maximum belt width toward the sidewall portion is made within a range of 8-15% of the belt width, whereby the rolling resistance of the tire can more effectively be reduced.

When the peripheral length is less than 8%, the bending deformation of the tread portion in the widthwise direction can not effectively be controlled and hence the rolling resistance of the tire can not be sufficiently reduced, while when it exceeds 15%, the deformation of the sidewall portion becomes large and the tire weight undesirably increases and hence the rolling resistance increases.

In the pneumatic radial tire of the invention, the tire weight and the rolling resistance can effectively be reduced by adequately selecting the ground contact width and rubber gauge of the tread portion, rubber gauge of the sidewall portion, and tan $\delta$ of tread base rubber and sidewall rubber and combining them.

In this tire, the thinnest portion of the inner liner is made to have a thickness of 0.2-0.7 mm, whereby the tire weight can be more reduced and internal loss can effectively be decreased. Further, the inner liner is made from brominated butyl rubber, so that even if the thickness is thin, air leakage can very effectively be prevented.

When the ground contact width of the tread portion is less than 0.55 of the maximum tire width, it becomes too narrow to degrade the wear resistance and steering stability, while when it exceeds 0.70 of the maximum tire width, the weight of the tread portion and the rolling resistance increase to degrade the fuel consumption.

When the rubber gauge of the tread portion is less than 0.05 of the tire height, it becomes too thin to degrade the wear resistance, ride comfortability and the like, while when it exceeds 0.08 of the tire height, the weight and internal loss increase to degrade the fuel consumption.

When tan $\delta$ of the base rubber in the tread portion is less than 0.02, the crack resistance and cut resistance are degraded to lower the durability, while when it exceeds 0.07, the internal loss increases to degrade the fuel consumption.

Further, when the rubber gauge of the sidewall portion is within a range of 1.0-2.5 mm, the weight of the sidewall portion is sufficiently reduced while giving satisfactory cut resistance to the sidewall portion. If it is less than 1.0 mm, sufficient cut resistance and the like can not be maintained, while if it exceeds 2.5 mm, the weight becomes too large.

When tan $\delta$ of the rubber in the sidewall portion is less than 0.02, cracking is apt to be caused, while when it exceeds 0.15, the internal loss becomes too large to degrade the fuel consumption.

When the thickness of the thinnest portion of the inner liner is less than 0.2 mm, the risk of causing air leakage becomes high, while when it exceeds 0.7 mm, sufficient weight reduction and low internal loss can not be attained.

In a modified embodiment of the invention, the belt is comprised of a radially inner belt layer containing steel cords therein and a radially outer belt layer containing organic fiber cords therein, whereby the tire weight can further be reduced. Further, the outer belt layer is folded at both side ends, whereby road noise actualized in accordance with low fuel consumption can effectively be reduced.

In another modified embodiment of the invention, the rubber gauge at a position separated from a ground contact end of the tread portion toward the bead portion at a distance as a peripheral length of 3-10 mm is within a range of 60-70% of the rubber gauge of the tread portion, and a rubber gauge at a position further separated from the above position toward the bead portion at a distance corresponding to 12-17% of a peripheral length ranging from a contact end of the bead portion with a rim flange to the contact end of the tread portion is within a range of 40-50% of the rubber gauge of the tread portion, whereby reduction of tire weight and high flexibility can be attained to realize the reduction of the rolling resistance and the improvement of the ride comfortability.

The reason why the outward end of the rubber gauge decreased portion in the radial direction of the tire is preferably located at a distance of 3-10 mm from the ground contact end of the tread portion is due to the fact that when the distance is less than 3 mm, the rigidity of the tread end portion becomes too low to prematurely cause abnormal wear in the tread portion and also the rubber gauge becomes too thin in the vicinity of the belt end to degrade the durability, while when it exceeds 10 mm, the rigidity in the vicinity of the tread end portion can not properly be decreased and sufficient flexibility can not be obtained.

Further, the reason why the inward end of the rubber gauge decreased portion in the radial direction of the tire is preferably located at a position separated from the position of the outward end over a distance corresponding to 12-17% of the peripheral length is due to the fact that when the distance is less than 12%, the length of the rubber gauge decreased portion becomes too short to insufficiently attain the low fuel consumption and the improvement of ride comfortability, while when it exceeds 17%, the length of the rubber gauge decreased portion becomes too long to excessively lower the rigidity between the tread portion and the sidewall portion and degrade the steering stability.

Moreover, the reason why the rubber gauge at the outward end is preferably 60-70% of the rubber gauge of the tread portion is due to the fact that when it is less than 60%, the rubber gauge decreased portion becomes too thin and comes near the belt end to degrade the durability (or resistance to separation failure at belt end), while when it exceeds 70%, the effect of decreasing the rigidity is insufficient. On the other hand, the reason why the rubber gauge at the inward end is preferably 40-50% of the rubber gauge of the tread portion is due to the fact that when it is less than 40%, the rubber gauge decreased portion becomes too thin to degrade the durability (or side cut resistance), while when it exceeds 50%, the effect of decreasing the rigidity is insufficient.

In Fig. 1 is sectionally shown a first embodiment of a pneumatic radial tire, in which numeral 1 is a radial carcass of a single carcass ply and numeral 2 a belt superimposed about a crown portion of the carcass 1 and composed of two belt layers 2a, 2b.

In the belt 2, cords of the two belt layers 2a, 2b are extended at a relatively small cord angle with respect to the circumferential direction of the tire and crossed with each other. Furthermore, the inner belt layer 2a has a width wider than that of the outer belt layer 2b.

Further, an auxiliary layer 3 is disposed on each side region of the belt 2 and extended over a position of maximum width of the belt 2 toward a sidewall portion 8 of the tire.

A tread rubber is arranged on the belt 2 and the auxiliary layer 3 to form a tread portion 4. The width BW of the belt 2 is within a range of 70-110% of a ground contact width TW of the tread portion 4, while the rubber gauge D of the tread portion 4 is not more than 4.5 times the thickness d of the belt 2 including the thickness of coating rubber.

The auxiliary layer 3 is comprised of cords extending substantially in the circumferential direction of the tire, in which Young's modulus of these cords is made less than that of the cord in the belt layer and a peripheral length $\ell$ of a portion in the auxiliary layer 3 extending from a position of maximum belt width toward the sidewall portion is within a range of 8-15% of the belt width BW.

According to the tire of the above structure, the difference in the ground contact length between the central region and the side region in the tread portion is made sufficiently small as previously mentioned, whereby the rolling resistance of the tire can effectively be reduced.

Moreover, in order to further reduce the rolling resistance of such a tire, it is preferable to add the following conditions to the above structure.

That is, each end portion of the carcass 1 is wound around a bead core 5 from the inside of the tire toward the outside thereof, while a bead filler 6 is disposed outside the bead core 5 between a main body 1a and a turnup portion 1b of the carcass 1 and a rubber chafer 7 is arranged outside the turnup portion 1b.

Moreover, the rubber gauge D of the tread portion 4 is within a range of 0.05-0.08, preferably 0.065-0.075, of a tire height SH as measured from the bead base of the bead portion, and the ground contact width TW of the tread portion 4 is within a range of 0.55-0.70, preferably 0.60-0.65, of a maximum tire width SW, and tan $\delta$ of cap rubber for the tread portion 4 is 0.07-0.15, and tan $\delta$ of base rubber for the tread portion 4 is 0.02-0.07, and the rubber gauge t of the sidewall portion 8 at a position of the maximum tire width SW is within a range of 1.0-2.5 mm, preferably 1.5-2.2 mm. In addition, the height h of the bead filler 6 measured from the bead base is lower than the height H of the rubber chafer 7 measured from the bead base, while a volume ratio of the bead filler 6 to the rubber chafer 7 is within a range of 10-40%, preferably 20-30%.

In this case, the rubber chafer 7 has a maximum thickness at a position substantially corresponding to a radially outward end of the bead filler 6.

According to the structure satisfying the above additional conditions, the tire weight is further reduced and the rolling resistance is more positively reduced to realize a lower fuel consumption of the vehicle.

The coefficient of rolling resistance between a tire 1 and a comparative tire will be described with respect to the following comparative test.

◎ Tires to be tested have a tire size of 135/55R 16.

- Tire 1 is a tire of Fig. 1 in which the ground contact width TW of the tread portion is 97 mm, the width of the inner belt layer 2a is 100 mm, the width of the outer belt layer 2b is 90 mm, the rubber gauge D of the tread portion is 5.8 mm, the thickness d of the belt is 2.3 mm, Young's modulus of cords in the auxiliary layer is 180 kg/mm$^2$, Young's modulus of cords in the belt layers is $1.8 \times 10^4$ kg/mm$^2$, and the peripheral length $\ell$ of the auxiliary layer is 13 mm.
- Comparative tire 1 is a tire having the same structure as the tire 1 except that the auxiliary layer 3 is omitted.
- Comparative tire 2 is a tire having the same structure as the tire 1 except that the auxiliary layer 3 is omitted and the width of the inner belt layer is 110 mm.

◎ Test method

Each of the above tires is inflated under an internal pressure of 2.5 kgf/cm$^2$ and rotated on a rotating steel drum of 1707.6 mm in outer diameter and 400 mm in width having a smooth surface under a load L of 150 kgf as shown in Fig. 2, during which the coefficient of rolling resistance in a shaft for supporting the tire is measured according to the following equations:

$$\text{Rolling resistance } F_R = F_t \times (1 + rT/R_D)$$

$$\text{Coefficient of rolling resistance } RR_C = F_R/L \; (\times 10^{-4})$$

$F_t$:  rolling resistance on the shaft - skim value
$R_D$:  radius of the drum
rT:  rotating radius of the tire under load
L :  load

◎ Test result

The test results are indicated by an index on the basis that the comparative tire 1 is 100, and shown in Table 1. The smaller the index value, the better the result.

Table 1

|  | Comparative tire 1 | Comparative tire 2 | Tire 1 |
|---|---|---|---|
| Coefficient of rolling resistance | 100 | 95.5 | 82.1 |

As seen from Table 1, the coefficient of rolling resistance can largely be reduced in the tire 1 under the action of the belt 2 and the auxiliary layer 3 as compared with those of the comparative tires 1 and 2.

In Fig. 3 is schematically shown a second embodiment of a pneumatic radial tire, according to the invention, which has substantially the same structure as the first embodiment of Fig. 1 except for the following.

That is, the tread portion 4 consists of a cap rubber 4a and a base rubber 4b having tan δ of 0.02-0.07, preferably 0.03-0.05. The ground contact width TW of the tread portion 4 is within a range of 0.55-0.70, preferably 0.60-0.65, of the maximum tire width SW, and the rubber gauge D of the tread portion 4 is within a range of 0.05-0.08, preferably 0.065-0.075, of the tire height SH. Further, the sidewall portion 8 has a rubber gauge t of 1.0-2.5 mm, preferably 1.5-2.2 mm, and tan δ of 0.02-0.15, preferably 0.05-0.09.

Furthermore, this tire is provided at its innermost side with a contoured inner liner 10 of brominated butyl rubber having an air barrier property, in which the thickness of a thinnest portion is 0.2-0.7 mm, preferably 0.3-0.4 mm.

According to this tire, the tire weight and the rolling resistance can effectively be reduced to realize low fuel consumption. Furthermore, the internal loss can be further reduced because the minimum thickness of the inner liner 10 is 0.2-0.7 mm.

In order to further reduce the rolling resistance of the above tire, the height h of the bead filler 6 is made lower than the height H of the rubber chafer 7, and the volume ratio of the bead filler 6 to the rubber chafer 7 is within a range of 10-40%, preferably 20-30% likewise the first embodiment. Thus, the cut resistance can be enhanced by making the height H of the rubber chafer 7 higher, and also the rolling resistance of the tire can be effectively reduced by making the volume of the bead filler 6 having a large tan δ sufficiently smaller than that of the rubber chafer 7.

The rolling resistance and resistance to air leakage between an invention tire 2 and a comparative tire will be described with respect to the following comparative test.

◎ Tires to be tested have a tire size of 175/70R 13 and are mounted onto a rim of 5J x 13 under an internal pressure of 2.5 kgf/cm$^2$.

- Invention tire 2 is a tire shown in Fig. 3, in which the carcass 1 is comprised of polyethylene terephthalate fiber cords of 1000d/2, each of the belt layers 2a, 2b is comprised of 1x4 steel cords arranged at a cord angle of 20° with respect to the circumferential direction of the tire, the ratio of ground contact width TW of the tread portion (= 114 mm) to the maximum tire width SW (= 175 mm) is 0.651, the ratio of rubber gauge D of tread portion (= 7 mm) to tire height SH (= 123 mm) is 0.057, tan δ of base rubber of the tread portion is 0.03, the inner liner 10 is made from brominated butyl rubber and has a minimum thickness of 0.3 mm, the height h of the bead filler 6 is 15 mm, the height H of the rubber chafer 7 is 32 mm, and the volume ratio of bead filler to rubber chafer is 26%.
- Comparative tire 3 is a tire having the same structure as in the invention tire 2 except that tan δ of base rubber in the tread portion is 0.08, tan δ of rubber in the sidewall portion is 0.15 and the inner liner is made from chlorinated butyl rubber and has a minimum thickness of 0.8 mm.

◎ Test methods

The rolling resistance is evaluated by an inertial running process after the tire is rotated on a rotating steel drum of 1707.6 mm in outer diameter and 350 mm in width having a smooth surface at a speed of 0-180 km/hr under a load of 300 kg.

The resistance to air leakage is evaluated by observing a change of internal pressure after being left to stand at a state of mounting on the rim for 3 months.

◎ Test results

The test results are shown in Table 2 by an index value. The larger the index value, the better the result.

Table 2

|  | Comparative tire 3 | Invention tire 2 |
|---|---|---|
| Rolling resistance | 100 | 108 |
| Resistance to air leakage | 100 | 100 |

As seen from Table 2, the invention tire 2 can maintain a resistance to air leakage equal to that of the comparative tire 3 even if the thickness of the inner liner is made thin, while the tire weight and the internal loss are reduced to effectively reduce the rolling resistance.

In Fig. 4 is schematically shown a third embodiment of a pneumatic radial tire, according to the invention, which has substantially the same structure as the second embodiment except for the following.

In the belt 2 of this tire, the radially inner belt layer 2a is comprised of steel cords, and the radially outer belt layer 2b is comprised of organic fiber cords and folded at both ends outward in the radial direction of the tire and inward in the widthwise direction of the tread portion.

According to the tire of the third embodiment, the tire weight and the rolling resistance can effectively be reduced to satisfactorily realize the low fuel consumption.

The rolling resistance and road noise between an invention tire 3 and a comparative tire will be described with respect to the following comparative test.

◎ Tires to be tested have a tire size of 195/65R 14 and are mounted onto a rim of 6J x 14 under an internal pressure of 2.0 kgf/cm$^2$.

- Invention tire 3 is a tire shown in Fig. 4, in which the carcass 1 is comprised of polyethylene terephthalate fiber cords of 1000d/2, the ratio of ground contact width TW of the tread portion (= 137 mm) to the maximum tire width SW (= 200 mm) is 0.685, the ratio of rubber gauge D of tread portion (= 8 mm) to tire height SH (= 125 mm) is 0.064, tan δ of base rubber of the tread portion is 0.03, the sidewall portion 8 has a rubber gauge t of 2.2 mm and tan δ of 0.07, the radially inner belt layer 2a is comprised of 1x4 steel cords arranged at a cord angle of 20° with respect to the circumferential direction of the tire, the radially outer belt layer 2b is comprised of aromatic polyamide fiber cords of 1500d/2 arranged at a cord angle of 20° with respect to the circumferential direction and folded at both ends inward in the widthwise direction of the tire, the inner liner 10 is made from brominated butyl rubber and has a minimum thickness of 0.3 mm, the height h of the bead filler 6 is 15 mm, the height H of the rubber chafer 7 is 32 mm, and the volume ratio of bead filler to rubber chafer is 26%.
- Comparative tire 4 is a tire having the same structure as the invention tire 3 except that tan δ of base rubber in the tread portion is 0.08, tan δ of rubber in the sidewall portion is 0.16, each of the inner and outer belt layers is comprised of 1x4 steel cords, and the inner liner is made from chlorinated butyl rubber and has a minimum thickness of 0.8 mm.

◎ Test methods

The rolling resistance is evaluated by an inertial running process after the tire is rotated on a rotating steel drum of 1707.6 mm in outer diameter and 350 mm in width having a smooth surface at a speed of 0-180 km/hr under a load of 400 kg.

The road noise is evaluated by measuring noise inside compartment at a position corresponding to a left ear of a driver when the tire is mounted on a vehicle having a displacement of 1600 cc and run on a rough road surface at a speed of 60 km/hr.

◎ Test results

The rolling resistance of the invention tire 3 is 105 as an index value when the rolling resistance of the comparative tire 4 is 100. In this case, the larger the index value, the better the result.

As to the road noise, sound pressure distribution of frequency is obtained as shown by a graph of Fig. 5, from which it is apparent that the sound pressure level as an over-all value in the invention tire 3 is lower by 1 dB than that of the comparative tire 4.

As seen from the above results, the rolling resistance and road noise can effectively be reduced in the invention tire 3.

In Fig. 6 is schematically shown a fourth embodiment of a pneumatic radial tire, which has substantially the same structure as the second embodiment except for the following.

In this tire, the rubber gauge h1 at a position B separated from a ground contact end A of the tread portion toward the bead portion at a distance as a peripheral length of 3-10 mm is within a range of 60-70% of the rubber gauge D of the tread portion 4, and the rubber gauge h2 at a position C further separated from the above position B toward the bead portion at a distance corresponding to 12-17% of a peripheral length ranging from a contact end E of the bead portion with a rim flange 11 to the contact end A of the tread portion is within a range of 40-50% of the rubber gauge D of the tread portion, whereby the rubber gauge is gradually changed between the positions B and C.

According to the tire of the above structure, the thinned portion between the positions B and C is easily deformed to mitigate strain energy, whereby the rolling resistance is effectively reduced.

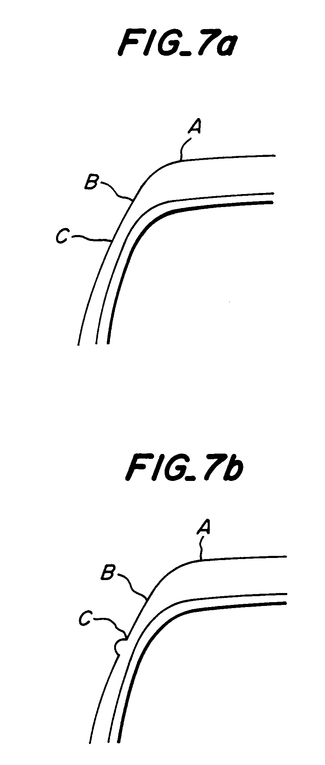

In the illustrated embodiment, the thinned portion between the positions B and C is somewhat indented as compared with the other portions to form a recess as an annular groove. However, the thinned portion can be smoothly connected to the other portions without indenting as shown in Fig. 7a, or the thinned portion can be smoothly connected to the other portions through a protruding decoration line arranged at a radially inward end of the thinned portion as shown in Fig. 7b. The embodiments shown in Figs. 7a and 7b can develop the same function and effect as the embodiment shown in Fig.6.

The rolling resistance and ride comfortability between a tire 4 and a comparative tire will be described with respect to the following comparative test.

◎ Tires to be tested have a tire size of 155/65R 12 and are mounted onto a rim of 4x1/2J x 12 under an internal pressure of 2.5 kgf/cm$^2$.

- Tire 4 is a tire shown in Fig. 6, in which the carcass 1 is comprised of polyethylene terephthalate fiber cords of 1000d/2, each of the inner and outer belt layers is comprised of 1x4 steel cords arranged at a cord angle of 20° with respect to the circumferential direction, tan $\delta$ at 90°C of cap rubber in the tread portion is 0.11, the rubber gauge of the sidewall portion is 2.2 mm, the ratio of ground contact width TW of the tread portion (= 95 mm) to the maximum tire width SW (= 157 mm) is 0.605, the ratio of rubber gauge D of tread portion (= 7 mm) to tire height SH (= 98.3 mm) is 0.071, the distance of the thinned portion from the ground contact end A to the position B is 7 mm, the rubber gauge h1 at the position B is 65% of the rubber gauge D of the tread portion, the distance from the position B to the position C is 14% of the peripheral length (85 mm) between the positions A and E, and the rubber gauge h2 at the position C is 43% of the rubber gauge D, the height h of the bead filler 6 is 15 mm, the height H of the rubber chafer 7 is 32 mm, and the volume ratio of bead filler to rubber chafer is 26%.

- Comparative tire 5 is a tire having the same structure as the tire 4 except that the thinned portion is omitted.

◎ Test methods

The rolling resistance is evaluated by an inertial running process after the tire is rotated on a rotating steel drum of 1707.6 mm in outer diameter and 350 mm in width having a smooth surface at a speed of 0-180 km/hr under a load of 400 kg.

The ride comfortability is evaluated by a feeling test of a driver when the tire is actually run on a rough road.

◎ Test results

The test results are shown in Table 3 by an index value. Moreover, the larger the index value, the better the result.

Table 3

|  | Rolling resistance | Ride comfortability |
|---|---|---|
| Comparative tire 5 | 100 | 100 |
| Tire 4 | 103 | 103 |

As seen from Table 3, in the tire 4, the rolling resistance and ride comfortability can more effectively be improved as compared with the comparative tire 5.

As mentioned above, according to the invention, the rolling resistance of a tire as well as the tire weight can effectively be reduced to sufficiently realize low fuel consumption and also reduction of road noise and improvement of ride comfortability can satisfactorily be attained.

**Claims**

1. A pneumatic radial tire comprising a tread portion (4) of cap and base structure, a pair of sidewall portions (8) extending inward from tread ends in the radial direction of the tire, a pair of bead portions extending from the sidewall portions, a carcass (1) of at least one carcass ply extending between the bead portions and containing cords substantially arranged at an angle of 90° with respect to the circumferential direction of the tire, a belt (2) of two belt layers (2a, 2b) each containing cords arranged at a relatively small cord angle with respect to the circumferential direction, cords of which layers being crossed with each other, and an inner liner (10), characterized in that a ground contact width (TW) of the tread portion (4) is within a range of 0.55-0.70 of the maximum width (SW) of the tire, and a rubber gauge (D) of the tread portion (4) is within a range of 0.05-0.08 of a tire height (SH) as measured from a bead base of the bead portion, and a base rubber (4b) of the tread portion (4) has tan $\delta$ of 0.02-0.07, and the sidewall portion (8) has a rubber gauge (t) of 1.0-2.5 mm and tan $\delta$ of 0.02-0.15, and the inner liner (10) is made from brominated butyl rubber and has a thinnest portion of 0.2-0.7 mm.

2. A pneumatic radial tire as claimed in claim 1, characterized in that said belt (2) comprises a radially inner belt layer (2a) comprised of steel cords and a radially outer belt layer (2b) comprised of organic fiber cords and folded at its side ends inward in the widthwise direction of the tread portion.

3. A pneumatic radial tire as claimed in claim 1 or 2, characterized in that a rubber gauge (h1) at a position (B) separated from a ground contact end (A) of the tread portion toward the bead portion at a distance as a peripheral length of 3-10 mm is within a range of 60-70% of the rubber gauge (D) of the tread portion (4), and a rubber gauge (h2) at a position (C) further separated from the said position (B) toward the bead portion at a distance corresponding to 12-17% of a peripheral length ranging from a contact end (E) of the bead portion with a rim flange (11) to the contact end (A) of the tread portion is within a range of 40-50% of the rubber gauge (D) of the tread portion (4).

4. A pneumatic radial tire as claimed in any of claims 1 to 3, characterized in that at least one auxiliary layer (3) is disposed on each side portion of the belt (2) so as to extend toward a sidewall portion (8) over a position of maximum width of the belt and is comprised of cords substantially extending in the circumferential direction, in which a Young's modulus of the cord is less than that of the cord in the belt and a peripheral length ($\ell$) of a portion extending from the maximum width of the belt toward the sidewall portion (8) in the auxiliary layer (3) is within a range of 8-15% of the width (BW) of the belt.

5. A pneumatic radial tire as claimed in any of claims 1 to 4, characterized in that the ground contact width (TW) of the tread portion (4) is within a range of 0.60 - 0.65 of the maximum width (SW) of the tire.

6. A pneumatic radial tire as claimed in any of claims 1 to 5, characterized in that the rubber gauge (D) of the tread portion (4) is within a range of 0.065 - 0.075 of the tire height (SH).

7. A pneumatic radial tire as claimed in any of claims 1 to 6, characterized in that the base rubber (4b) of the tread portion (4) has tan $\delta$ of 0.03 - 0.05.

8. A pneumatic radial tire as claimed in any of claims 1 to 7, characterized in that the sidewall portion (8) has a rubber gauge (t) of 1.5 - 2.2 mm and tan $\delta$ of 0.05 - 0.09.

9. A pneumatic radial tire as claimed in any of claims 1 to 8, characterized in that the inner liner (10) has a thinnest portion of 0.3 - 0.4 mm.

**Patentansprüche**

1. Radialer Luftreifen mit einem Laufflächenbereich (4), der eine Kappen- und Basisstruktur hat, zwei Seitenwandbereichen (8), die sich Von den Laufflächenrändern in der radialen Richtung des Reifens nach innen erstrecken, zwei Wulstbereichen, die von den Seitenwandbereichen ausgehen, einer Karkasse (1) aus mindestens einer Karkassenlage, die sich zwischen den Wulstbereichen erstreckt und Cordfäden enthält, die im wesentlichen unter einem Winkel von 90° bezüglich der Umfangsrichtung des Reifens angeordnet sind, einem Gürtel (2) aus zwei Gürtel schichten (2a, 2b), von denen jede Cordfäden enthält, die unter einem relativ kleinen Winkel bezüglich der Umfangsrichtung angeordnet sind, wobei die Cordfäden dieser Schichten sich überkreuzen, und einer inneren Einlage (10), dadurch gekennzeichnet, daß die Bodenkontaktbreite (TW) des Laufflächenbereichs (4) innerhalb eines Bereichs liegt, der der 0,55-0,70-fachen maximalen Breite (SW) des Reifens entspricht, und die Gummidicke (D) des Laufflächenbereichs (4) innerhalb eines Bereichs liegt, der der 0,05-0,08-fachen Reifenhohe (SH), gemessen von der Wulstbasis des Wulstbereichs, entspricht, und ein Basisgummi (4b) des Laufflächenbereichs (4) einen tan $\delta$ von 0,02-0,07 hat, und der Seitenwandbereich (8) eine Gummidicke (t) von 1,0-2,5 mm und einen tan $\delta$ von 0,02-0,15 hat, und die innere Einlage (10) aus bromiertem Butylgummi besteht und einen dünnsten Bereich von 0,2-0,7 mm hat.

2. Radialer Luftreifen gemäß Anspruch 1, dadurch gekennzeichnet, daß der Gürtel (2) eine radial innere Gürtelschicht (2a) aufweist, die aus Stahlcordfäden besteht, und eine radial äußere Gürtelschicht (2b) aufweist, die aus Cordfäden aus einer organischen Faser besteht und an ihren Seitenrändern in der Breitenrichtung des Laufflächenbereichs gefaltet ist.

3. Radialer Luftreifen gemäß Anspruch 1 oder 2, dadurch gekennzeichnet, daß die Gummidicke (h1) bei einer Position (B), die von des Bodenkontaktrand (A) des Laufflächenbereichs zu dem Wulstbereich hin einen Abstand hat, der einer Umfangslänge von 3-10 mm entspricht, innerhalb eines Bereichs von 60-70% der Gummidicke (D) des Laufflächenbereichs (4) liegt, und die Gummidicke (h2) bei einer Position (C), die von der Position (B) zu dem Wulstbereich hin einen Abstand hat, der 12-17% der Umfangslänge entspricht, die von dem Kontaktrand (E) des Wulstbereichs bei dem Felgenflansch (11) bis zu dem Kontaktrand (A) des Laufflächenbereichs reicht, innerhalb eines Bereichs von 40-50% der Gummidicke (D) des Laufflächenbereichs (4) liegt.

4. Radialer Luftreifen gemäß irgendeinem der Ansprüche 1 bis 3, dadurch gekennzeichnet, daß mindestens eine Hilfsschicht (3) auf jedem Seitenbereich des Gürtels (2) so angeordnet ist, daß sie sich über eine Position des Gürtels mit maximaler Breite zu einem Seitenwandbereich (8) hin erstreckt, und aus Cordfäden besteht, die sich im wesentlichen in der Umfangsrichtung erstrecken, wobei der Elastizitätsmodul des Cordfadens kleiner als bei dem Cordfaden des Gürtels ist, und die Umfangslänge ($\ell$) eines Bereichs, der sich bei der Hilfsschicht (3) von der maximalen Breite des Gürtels zu dem Seitenwandbereich (8) hin erstreckt, innerhalb eines Bereichs von 8-15% der Breite (BW) des Gürtel liegt.

5. Radialer Luftreifen gemäß irgendeinem der Ansprüche 1 bis 4, dadurch gekennzeichnet, daß die Bodenkontaktbreite (TW) des Laufflächenbereichs (4) innerhalb eines Bereichs liegt, der der 0,60-0,65-fachen maximalen Breite (SW) des Reifens entspricht.

6. Radialer Luftreifen gemäß irgendeinem der Ansprüche 1 bis 5, dadurch gekennzeichnet, daß die Gummidicke (D) des Laufflächenbereichs (4) innerhalb eines Bereichs liegt, der der 0,065-0,075-fachen Reifenhöhe (SH) entspricht.

7. Radialer Luftreifen gemäß irgendeinem der Ansprüche 1 bis 6, dadurch gekennzeichnet, daß der Basisgummi (4b) des Laufflächenbereichs (4) einen tan $\delta$ von 0,03-0,05 hat.

8. Radialer Luftreifen gemäß irgendeinem der Ansprüche 1 bis 7, dadurch gekennzeichnet, daß der Seitenwandbereich (8) eine Gummidicke (t) von 1,5-2,2 mm, und einen tan $\delta$ von 0,05-0,09 hat.

9. Radialer Luftreifen gemäß irgendeinem der Ansprüche 1 bis 8, dadurch gekennzeichnet, daß die innere Einlage (10) einen dünnsten Bereich von 0,3-0,4 mm hat.

**Revendications**

1. Bandage pneumatique radial comprenant une portion de bande de roulement (4) de structure à recouvrement/base, une paire de portions de flancs (8) s'étendant vers l'intérieur depuis les extrémités de bande de roulement dans la direction radiale du pneumatique, une paire de portions de talons s'étendant depuis les portions de flancs, une carcasse (1) comprenant au moins une nappe de carcasse s'étendant entre les portions de talons et contenant des câblés arrangés essentiellement en formant un angle de 90° par rapport à la direction circonférentielle du pneumatique, une ceinture (2) comprenant deux couches de ceinture (2a, 2b) contenant chacune des câblés arrangés en formant un angle de câblé relativement petit par rapport à la direction circonférentielle, les câblés desdites couches se croisant l'un l'autre, et un calandrage intérieur (10), caractérisé en ce que la largeur de contact au sol (TW) de la portion de bande de roulement (4) représente une valeur dans le domaine de 0,55-0,70 de la largeur maximale (SW) du pneumatique, et l'épaisseur de caoutchouc (D) de la portion de bande de roulement (4) représente une valeur dans le domaine de 0,05-0,08 de la hauteur (SH) du pneumatique telle que mesurée depuis la base de la portion de talon, et le caoutchouc de base (4b) de la portion de bande de roulement (4) possède une valeur tan $\delta$ de 0,02-0,07, et la portion de flanc (8) possède une épaisseur de caoutchouc (t) de 1,0-2,5 mm et une valeur tan $\delta$ de 0,02-0,15, et le calandrage intérieur (10) est réalisé en caoutchouc butyle bromé et possède une portion la plus mince de 0,2-0,7 mm.

2. Bandage pneumatique radial selon la revendication 1, caractérisé en ce que ladite ceinture (2) comprend une couche de ceinture (2a) interne en direction radiale comprenant des câblés en acier et une couche de ceinture (2b) externe en direction radiale comprenant des câblés en fibres organiques et repliée à ses extrémités latérales vers l'intérieur sur la largeur de la portion de bande de roulement.

3. Bandage pneumatique radial selon la revendication 1 ou 2, caractérisé en ce que l'épaisseur de caoutchouc (h1) à une position (B) séparée de l'extrémité de contact au sol (A) de la portion de bande de roulement en direction de la portion de talon sur une distance correspondant à une longueur périphérique de 3-10 mm représente une valeur dans le domaine de 60-70% de l'épaisseur de caoutchouc (D) de la portion de bande de roulement (4), et l'épaisseur de caoutchouc (h2) à la position (C) davantage séparée de ladite position (B) en direction de la portion de talon sur une distance correspondant à 12-17% de la longueur périphérique s'étendant depuis l'extrémité de contact (E) de la portion de talon avec le rebord de jante (11) jusqu'à l'extrémité de contact (A) de la portion de bande de roulement représente une valeur dans le domaine de 40-50% de l'épaisseur de caoutchouc (D) de la portion de bande de roulement (4).

4. Bandage pneumatique radial selon l'une quelconque des revendications 1 à 3, caractérisé en ce qu'au moins une couche auxiliaire (3) est disposée sur chaque portion latérale de la ceinture (2) de façon à s'étendre en direction de la portion de flanc (8) par-dessus une position correspondant à la largeur maximale de la ceinture et comprend des câblés s'étendant essentiellement dans la direction circonférentielle, le module de Young des câblés étant inférieur à celui des câblés dans la ceinture et la longueur périphérique ($\ell$) de la portion s'étendant depuis la largeur maximale de la ceinture en direction de la portion de flanc (8) dans la couche auxiliaire (3) représente une valeur dans le domaine de 8-15% de la largeur (BW) de la ceinture.

5. Bandage pneumatique radial selon l'une quelconque des revendications 1 à 4, caractérisé en ce que la largeur de contact au sol (TW) de la portion de bande de roulement (4) représente une valeur dans le domaine de 0,60-0,65 de la largeur maximale (SW) du pneumatique.

6. Bandage pneumatique radial selon l'une quelconque des revendications 1 à 5, caractérisé en ce que l'épaisseur de caoutchouc (D) de la portion de bande de roulement (4) représente une valeur dans le domaine de 0,065-0,075 de la hauteur (SH) du pneumatique.

7. Bandage pneumatique radial selon l'une quelconque des revendications 1 à 6, caractérisé en ce que le caoutchouc de base (4b) de la portion de bande de roulement (4) possède une valeur tan $\delta$ de 0,03-0,05.

8. Bandage pneumatique radial selon l'une quelconque des revendications 1 à 7, caractérisé en ce que la portion de flanc (8) possède une épaisseur de caoutchouc (t) de 1,5-2,2 mm et une valeur tan $\delta$ de 0,05-0,09.

9. Bandage pneumatique radial selon l'une quelconque des revendications 1 à 8, caractérisé en ce que le calandrage intérieur (10) possède une portion la plus mince de 0,3-0,4 mm.

## FIG_1

## FIG_2

# FIG_3

## FIG. 4

## FIG. 5

1/3 oct Central Frequency (Hz)

# FIG. 6

# FIG. 7a

A
B
C

# FIG. 7b

A
B
C